# EUROPÄISCHE PATENTSCHRIFT

(11) **EP 2 106 869 B1**
(45) Veröffentlichungstag und Bekanntmachung des Hinweises auf die Patenterteilung: **19.09.2012**
(21) Anmeldenummer: 09004086.6
(22) Anmeldetag: 23.03.2009
(51) Int. Cl.: B23B 31/08, B23G 1/46

(54) **Spannzangenfutter**
Collet chuck
Mandrin à pince de serrage

(30) Priorität: 01.04.2008 DE 202008004935 U
(43) Veröffentlichungstag der Anmeldung: 07.10.2009
(73) Patentinhaber: Eugen Fahrion GmbH & Co., 73667 Kaisersbach (DE)
(72) Erfinder: Hornung, Karl, 73066 Uhingen (DE)
(74) Vertreter: Dreiss, Uwe

(56) Entgegenhaltungen:
- EP-A- 1 177 847
- EP-A- 1 839 786
- DE-A1- 4 031 486
- DE-U1- 9 201 037
- JP-A- 2000 141 130
- SU-A1- 837 581

## Beschreibung

Die Erfindung betrifft ein Spannzangenfutter gemäß dem Oberbegriff des Anspruchs 1, das an seinem einen Ende von einer Maschinenspindel aufgenommen werden kann und an seinem anderen Ende eine Spannzange aufnehmen kann, in der wiederum ein Gewindebohrer oder ein Wechseleinsatz zum Spannen von Gewindebohrern aufgenommen werden kann, wobei zwischen den beiden Enden Mittel vorgesehen sind, um beim Gewindebohren in Form des sogennanten "rigid tapping" auftretende axiale Zug- und/oder Druckspannungen abzufedern. Ein solches Spannzangenfutter ist aus der DE 20 2006 005642 oder aus der EP 1 177 847 B1 bekannt.

Derartige Spannzangenfutter verhindern, dass sich bei ansonsten starr eingespannten Gewindebohrer nach der Drehrichtungsumkehr hohe Axialkräfte ausbilden, die zu einem hohen Verschleiß des Gewindebohrers und zu einer Verschlechterung der Oberflächengüte des Gewindes führen.

Als Mittel der Abfederung der genannten axialen Zug- und/oder Druckspannungen ist es unter anderem bekannt geworden, zwischen Spannzange und Futterschaft einen Federkörper aus Elastomerverbindungen anzuordnen (DE 197 25 950 C2). Es ist ferner bekannt, zwischen dem Halter des Gewindebohrers und dem Schaft, der zur Aufnahme in einer Maschinenspindel dient, eine wendelförmige elastische Hülse vorzusehen, die in axialer Richtung wie eine Feder wirkt (SU 837581 und EP 1 177 847 B1). Diese muss jedoch gegen ein Kippen aus der axialen Ausrichtung von Schaft und Gewindebohrer durch einen Führungsdorn und gegebenenfalls durch eine den wendelförmigen Bereich außen umgebenden Führungsteil stabilisiert werden. Eine auf den Inhaber der vorliegenden Anmeldung zurückgehende vom konstruktiven Aufbau her einfachere und gleichwohl gegen ein Kippen aus der axialen Ausrichtung stabilere Anordnung sieht vor, dass zwischen dem zur Aufnahme in einer Maschinenspindel bestimmten Ende und dem zur Aufnahme der Spannzange bestimmten Ende entlang des Umfangs mehrere durch Stege voneinander beabstandete radiale Schlitze vorgesehen sind (DE 20 2006 005642 U1).

Aus der DE 92 01 037 U1 ist es bekannt, zwischen einem Spannfutter und einem Halter für einen Gewindebohrer eine Balgkupplung vorzusehen, welche an dem Spannfutter und dem Halter befestigt ist.

Die vorliegende Erfindung geht von der aus der DE 20 2006 005642 U1 bekannten Anordnung aus und stellt die Aufgabe, eine derartige Anordnung so zu vereinfachen, dass die Fertigung sehr viel kostengünstiger wird, wobei gleichwohl eine angepasste Federwirkung in axialer Richtung unter Wahrung einer Stabilität in radialer Richtung, insbesondere gegen ein Kippen aus der axialen Ausrichtung gewährleistet ist.

Diese Aufgabe wird gemäß der Erfindung dadurch gelöst, dass auf der Außenseite oder der Innenseite des Spannzangenfutters mindestens zwei erste umlaufende Nuten vorgesehen sind und dass auf der jeweiligen anderen Seite in axialer Richtung zwischen benachbarten ersten umlaufenden Nuten mindestens eine weitere umlaufende Nut vorgesehen ist, so dass sich ein mäanderförmiger Querschnitt ergibt.

Ein Ausführungsbeispiel der Erfindung wird im Folgenden unter Bezugnahme auf die beigefügte Zeichnungen beschrieben, die ein Ausführungsbeispiel zeigen. Es stellen dar:
- Figur 1: ein Schnitt durch ein Ausführungsbeispiel;
- Figur 2: in vergrößerter Darstellung den Bereich II in Figur 1;
- Figur 3: eine Darstellung entsprechend Figur 2 bei Belastung durch Zug;
- Figur 4: eine Darstellung wie Figur 2 bei Belastung durch Druck.

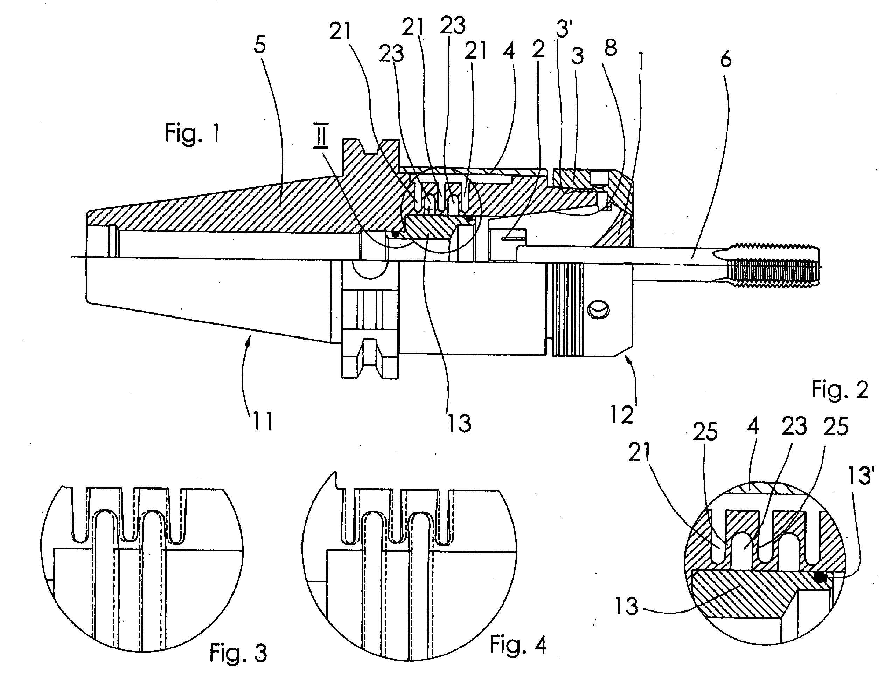

In das Spannzangenfutter 5 ist eine mit Schlitzen 2 versehene Spannzange 1 eingesetzt und mit Hilfe einer Spannmutter 3, die auf das Gewinde 3' aufgeschraubt ist, in der konischen Ausnehmung 8 des Spannzangenfutters 5 verspannt. In der Spannzange 1 ist ein Gewindebohrer 6 eingespannt. Das Spannzangenfutter 5 ist in seinem mittleren Bereich zwischen dem Ende 11, mit dem es in einer Maschinenspindel aufgenommen wird, und dem Ende 12, in dem der Gewindebohrer 6 eingespannt ist, auf der Außenseite mit drei axial beabstandeten umlaufenden Nuten 21 und auf der Innenseite mit zwei zwischen den ersteren angeordneten umlaufenden Nuten 23 versehen, so dass sich, wie ersichtlich, ein mäanderförmiger dünnerer Querschnitt ergibt, der - gleichsam wie eine Ziehharmonika - in axialer Richtung eine Abfederung der beim Gewindebohren, insbesondere bei der Bewegungsumkehr auftretenden Zug- und/oder Druckspannungen bewirkt. Die Materialstärke im Bereich des mäanderförmigen Querschnitts dieser Bereichs des Spanzangenfutters 5 muss mit der Elastizität des Materials so abgestimmt sein, dass sich die gewünschte Elastizität in axialer Richtung ergibt. Die Abfederung wird bei dieser Konstruktion vorwiegend durch die in axialer Richtung erfolgende Auslenkung der senkrecht zur Achse verlaufenden Stege 25 bewirkt, wie dies aus Figur 3 für den Fall einer Zugbelastung in axialer Richtung (Zugausgleich) und in Figur 4 für den Fall einer Druckbelastung (Druckausgleich) ergibt. Dabei ist jeweils der belastete Zustand in durchgezogenen Linien und - zum Vergleich - der unbelastete Zustand in strichpunktierten Linien dargestellt.

Die Nuten 21 sind außen durch eine Hülse 4, die Nuten 23 innen durch eine Hülse 13 abgedeckt. Die beiden O-Ringe 13' dienen der Abdichtung gegen das das Spannzangenfutter durchströmende Kühlmittel und zum Schutz gegen eindringende Späne und anderweitiger Verschmutzung.

Wie ersichtlich, sind zur Herstellung des Spannzangenfutters nur Dreharbeiten, jedoch keine - relativ teuren - Fräsarbeiten erforderlich. Das führt bei der Herstellung zu einer erheblichen Vereinfachung und Kostensenkung. Gleichzeitig hat sich dabei auch eine Verbesserung der Stabilität beim Druck- und Zugausgleich ergeben.

## Patentansprüche

1. Spannzangenfutter (5), das an seinem einen Ende (11) von einer Maschinenspindel aufgenommen werden kann und an seinem anderen Ende (12) eine Spannzange (1) aufnehmen kann, in der wiederum ein Gewindebohrer (6) oder ein Wechseleinsatz zum Spannen von Gewindebohrern aufgenommen werden kann, wobei zwischen den beiden Enden (11, 12) Mittel vorgesehen sind, um beim Gewindebohren in Form des sogenannten "rigid tapping" auftretende axiale Zug - und/oder Druckspannungen abzufedern, **dadurch gekennzeichnet, dass** die genannten Mittel dadurch gebildet werden, dass auf der Außenseite oder der Innenseite des Spannzangenfutters (5) mindestens zwei erste umlaufende Nuten (21) vorgesehen sind und dass auf der jeweiligen anderen Seite in axialer Richtung zwischen benachbarten ersten umlaufenden Nuten (21) mindestens eine weitere umlaufende Nut (23) vorgesehen ist, so dass sich ein mäanderförmiger Querschnitt ergibt.

2. Spannzangenfutter nach Anspruch 1, **dadurch gekennzeichnet, dass** der Querschnitt des Spannzangenfutters (5) teilweise durch radial sich erstreckende Stege (25) gebildet wird.

3. Spannzangenfutter nach einem der Ansprüche 1 bis 2, **dadurch gekennzeichnet, dass** die umlaufenden Nuten auf der Außenseite von einer Hülse (4) abgedeckt sind.

4. Spannzangenfutter nach einem der Ansprüche 1 bis 3, **dadurch gekennzeichnet, dass** die Nuten (23) auf der Innenseite des Spannzangenfutters (5) durch eine Hülse (13) abgedeckt sind.

5. Spannzangenfutter nach Anspruch 4, **dadurch gekennzeichnet, dass** die Nuten (23) gegenüber der auf der Innenseite angeordnete Hülse (13) durch O-Ringe (13') abgedichtet sind.

## Claims

1. A collet chuck (5), which at one end (11) may be accommodated by a machine spindle and at its other end (12) may accommodate a collet (1), within which a die (6) or an interchangeable element may be accommodated in order to clamp dies, whereby means are provided between both ends (11, 12) to cushion the axial tensile and/or pressure stresses that occur during machining in so-called "rigid tapping," wherein the aforementioned means are created by providing at least two first circumferential grooves (21) on the exterior or interior side of the collet chuck (5), and by providing at least one additional circumferential groove (23) on the other side in the axial direction between adjacent first circumferential grooves (21), thus producing a cross section that has a meander shape.

2. The collet chuck as recited in Claim 1, wherein the cross section of the collet chuck (5) is partially formed by radially extending bars (25).

3. The collet chuck as recited in either of Claims 1 or 2, wherein the circumferential grooves on the exterior side are covered by a sleeve (4).

4. The collet chuck as recited in any of Claims 1 to 3, wherein the grooves (23) on the interior side of the collet chuck (5) are covered by a sleeve (13).

5. The collet chuck as recited in Claim 4, wherein the grooves (23) opposite the sleeve (13) that is arranged on the interior side are sealed by O-rings (13').

## Revendications

1. Mandrin à pince de serrage (5), qui peut être réceptionné par une broche de machine sur l'une de ses extrémités (11) et peut recevoir une pince de serrage (1) sur son autre extrémité (12), pince dans laquelle à son tour un taraud (6) ou un insert interchangeable pour le serrage des tarauds peut être réceptionné, des moyens étant prévus entre les deux extrémités (11, 12) pour amortir des tensions de traction et/ou de pression axiales apparaissant sous forme de "rigid tapping" lors du taraudage, **caractérisé en ce que** lesdits moyens sont formés par le fait qu'au moins deux premières rainures (21) périphériques sont prévues sur le côté extérieur ou le côté intérieur du mandrin à pince de serrage (5) et **en ce qu'**au moins une autre rainure (23) périphérique est prévue sur l'autre côté respectif dans le sens axial entre des premières rainures (21) périphériques voisines, de sorte qu'on obtient une section en forme de méandre.

2. Mandrin à pince de serrage selon la revendication 1, **caractérisé en ce que** la section du mandrin à pince de serrage (5) est formée partiellement par des barrettes (25) s'étendant radialement.

3. Mandrin à pince de serrage selon l'une des revendications 1 à 2, **caractérisé en ce que** les rainures périphériques sont recouvertes sur le côté extérieur par un manchon (4).

4. Mandrin à pince de serrage selon l'une des revendications 1 à 3, **caractérisé en ce que** les rainures (23) sont recouvertes par un manchon (13) sur le côté intérieur du mandrin à pince de serrage (5).

5. Mandrin à pince de serrage selon la revendication 4, **caractérisé en ce que** les rainures (23) sont étanchéifiées par des joints toriques (13') par rapport au manchon (13) disposé sur le côté intérieur.
